Europäisches Patentamt

European Patent Office

Office européen des brevets

(19)

(11) **EP 1 177 450 B1**

(12) **EUROPÄISCHE PATENTSCHRIFT**

(45) Veröffentlichungstag und Bekanntmachung des Hinweises auf die Patenterteilung:
**19.01.2005 Patentblatt 2005/03**

(51) Int Cl.$^7$: **G01P 3/488**, G01D 5/20, G01D 5/22

(21) Anmeldenummer: **00925513.4**

(22) Anmeldetag: **09.05.2000**

(86) Internationale Anmeldenummer:
**PCT/IB2000/000601**

(87) Internationale Veröffentlichungsnummer:
**WO 2000/068696 (16.11.2000 Gazette 2000/46)**

(54) **VORRICHTUNG ZUR POSITIONS- UND/ODER GESCHWINDIGKEITSBESTIMMUNG SOWIE VERWENDUNGEN**

DEVICE FOR DETERMINING POSITIONING AND/OR SPEED AND USES THEREOF

DISPOSITIF POUR LA DETERMINATION DE POSITION OU DE VITESSE ET UTILISATIONS CORRESPONDANTES

(84) Benannte Vertragsstaaten:
**AT BE CH CY DE DK ES FI FR GB GR IE IT LI LU MC NL PT SE**

(30) Priorität: **11.05.1999 EP 99109417**

(43) Veröffentlichungstag der Anmeldung:
**06.02.2002 Patentblatt 2002/06**

(73) Patentinhaber:
- **Schikofsky, Robert**
  **66121 Saarbrücken (DE)**
- **Wacht, Hans**
  **54329 Konz-Könen (DE)**
- **Wacht, Michael**
  **54459 Wiltingen (DE)**
- **Nase, Rainer, Dipl.-Phys.**
  **D-66280 Sulzbach (DE)**

(72) Erfinder: **NASE, Rainer**
**D-66280 Sulzbach (DE)**

(74) Vertreter: **Troesch Scheidegger Werner AG**
**Schwäntenmos 14**
**8126 Zumikon (CH)**

(56) Entgegenhaltungen:
**EP-A- 0 528 199        EP-A- 0 664 441**
**DE-B- 1 217 085**

EP 1 177 450 B1

**Beschreibung**

Die vorliegende Erfindung betrifft eine Vorrichtung nach dem Oberbegriff des Patentanspruchs 1 sowie Verwendungen der Vorrichtung.

Zur Bestimmung von Geschwindigkeit oder Position werden einerseits magnetische anderseits optische Systeme eingesetzt, wobei sich die erst genannten durch eine grosse Robustheit und einen weiten Temperaturbereich auszeichnen. Im Zusammenhang mit rotierenden Systemen werden oft sogenannte Resolver eingesetzt, die auch als Absolutdrehgeber eingesetzt werden.

GB-A-1 217 085 (A-Dokument) beschreibt einen Linearpositionssensor mit zwei Teilen, deren relative Position bestimmt werden soll. Der erste Teil besteht aus einer U-förmigen Schiene mit im regelmässigem Abstand angeordneten Zähnen. Der zweite Teil besteht aus einem entsprechend U-förmigen Schlitten mit vier E-förmigen Polstücken, auf die je eine Erregerspule und eine Sensorspule gewickelt sind. Die vier E-förmigen Polstücke sind so angeordnet, dass sie je phasenverschoben entsprechenden drei Zähnen der Schiene gegenüberstehen, so dass durch die Erregerspule ein der Phasenlage entsprechender magnetischer Kreisfluss in Polstück, Schlitten und Schiene entsteht, der mit der Sensorspule erfasst wird.

In EP-0 174 290 ist ein Positions- und Geschwindigkeitsmessgerät beschrieben, das auf elektromagnetischer Basis funktioniert. Das bekannte Gerät weist einen kreisförmigen Stator und einen entsprechenden Rotor auf, wobei sowohl eine Erregerspule als auch mehrere Sensorspulen auf dem Stator vorgesehen sind. Der Rotor besteht im wesentlichen aus einem scheibenförmigen Element aus ferromagnetischem Material, wobei das scheibenförmige Element mit einer auf die Drehachse senkrecht stehenden Ebene einen spitzen Winkel einschliesst, womit in die vier auf dem Stator angeordneten Sensorspulen eine Spannung in Abhängigkeit der Position des scheibenförmigen Elementes induziert wird.

Diese bekannte Vorrichtung weist insbesondere den Nachteil auf, dass das Bauvolumen aufgrund des schräggestellten scheibenförmigen Elementes als Rotor eine Grösse erreicht, die zur Folge hat, dass ein Anbau - beispielsweise an ein Elektromotor - in einem separatem Gehäuse erforderlich ist. Damit ist die bekannte Vorrichtung direkt mechanischen Belastungen ausgesetzt und somit relativ störanfällig. Darüber hinaus sind die Kosten für das bekannte System relativ hoch.

Der vorliegenden Erfindung liegt daher die Aufgabe zugrunde, eine Vorrichtung anzugeben, die obenerwähnte Nachteile nicht aufweist.

Diese Aufgabe wird durch die im kennzeichnenden Teil des Patentanspruchs 1 angegebenen Massnahmen gelöst. Vorteilhafte Ausgestaltungen der Erfindung sowie Verwendungen sind in weiteren Ansprüchen angegeben.

Die Erfindung weist folgende Vorteile auf: Indem die Elemente des ersten Teils derart in bezug auf die Elemente des zweiten Teils angeordnet sind, dass die Signale an den Sensorspulen phasenverschoben sind, wobei zugleich der zweite Teil symmetrisch in bezug auf eine senkrecht auf die Elemente des zweiten Teils stehenden Ebene ist, wird ein äusserst kompakte Vorrichtung zur Positions- und/oder Geschwindigkeitsbestimmung erhalten. Die erfindungsgemässe Vorrichtung eignet sich dabei beispielsweise vorzüglich zur Integration in ein Wälzlager. Hierbei ist kein zusätzliches Gehäuse, keine Lagerstelle und kein zusätzlicher Einbauraum erforderlich.

Darüber hinaus eignet sich die erfindungsgemässe Vorrichtung auch vorzüglich zur Bestimmung von Ort und Geschwindigkeit bei linearen Bewegungen.

Die Erfindung wird nachfolgend anhand von Zeichnungen beispielsweise näher erläutert. Dabei zeigen

Fig. 1    einen prinzipiellen Aufbau einer erfindungsgemässen Vorrichtung mit zwei Sensorspulen in perspektivischer Darstellung,

Fig. 2    den Signalverlauf über einer Sensorspule bei Erregung mit Wechselstrom,

Fig. 3    schematisch, eine weitere Ausführungsform der erfindungsgemässen Vorrichtung in Seitenansicht,

Fig. 4    eine kreisförmige Ausführungsform der erfindungsgemässen Vorrichtung gemäss Fig. 1,

Fig. 5    eine kreisförmige Ausführungsform der erfindungsgemässen Vorrichtung gemäss Fig. 3,

Fig. 6    einen Schnitt senkrecht durch zwei Erregerspulen einer erfindungsgemässen Vorrichtung zur Absolutwertbestimmung und

Fig. 7    eine weitere Ausführungsform der erfindungsgemässen Vorrichtung, bei der Erreger- und Sensorspulen zusammen geschaltet sind.

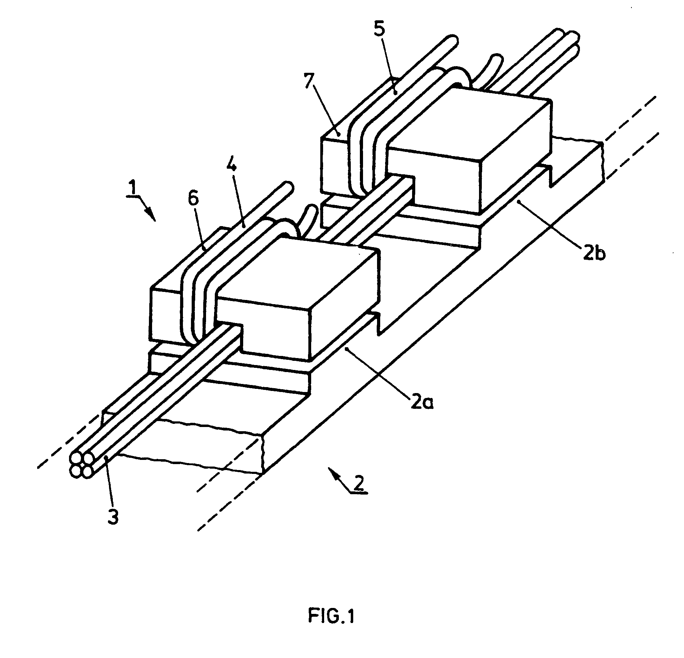

Fig. 1 zeigt in schematischer und perspektivischer Darstellung eine erfindungsgemässe Vorrichtung zur Verwendung bei linearen Bewegungen, bestehend aus einem ersten, beweglichen Teil 1 und einem zweiten, festen Teil 2, wobei zum erstgenannten eine Erregerspule 3, zwei Sensorspulen 4 und 5 sowie zwei U-förmige Elemente 6 und 7 gehören. Die aus vier Windungen bestehende Erregerspule 3 erstreckt sich durch die aus ferromagnetischem Material bestehenden U-förmigen Elemente 6 und 7, wobei ein durch die Erregerspule 3 fliessender Strom zu einem magnetischen Fluss in den U-förmigen Elementen 6 und 7 führt.

Der feste Teil 2 erstreckt sich entlang des beweglichen Teils 1 und besteht aus einem balkenförmigen Trägerelement, auf dem vorzugsweise in regelmässigem Abstand als Zähne ausgebildete Elemente vorgesehen sind, von denen zwei dargestellt und mit 2a und 2b bezeichnet sind. Der feste Teil 2 - oder zumindest dessen Elemente 2a und 2b - sind ebenfalls wie die U-förmigen Elemente 6 und 7 aus ferromagnetischem Material gefertigt.

Der nun durch den Erregerstrom in den U-förmigen Elementen 6 und 7 erzeugte magnetische Fluss induziert in den Sensorspulen 4 und 5 je eine elektrische Spannung, und zwar in Abhängigkeit von der Position des Zahnes 2a bzw. 2b in bezug auf das jeweilige U-förmige Element 6 bzw. 7. Die induzierte Spannung ist an den Anschlüssen der Sensorspule 4 maximal, wenn einer der Zähne des festen Teils 2 mit dem U-förmigen Element 6 deckungsgleich ist, d.h. wenn der magnetische Kreis, bestehend aus U-förmigem Element 6 und einem der Zähne des festen Teils 2, für den durch die Erregerspule 3 erzeugten Fluss bestmöglich geschlossen ist.

Wie bereits erwähnt sind die Zähne bzw. die Elemente des festen Teils 2 in regelmässigem Abstand auf dem balkenförmigen Trägerelement angeordnet. Demgegenüber sind die U-förmigen Elemente 6 und 7 des beweglichen Teils 1 erfindungsgemäss in einem anderen Abstand zueinander angeordnet. Damit ist es aufgrund der an den Sensorspulen 4 und 5 erhaltenen Signalen $U_4$ und $U_5$ möglich, die genaue Position des festen Teils 2 in bezug auf den beweglichen Teil 1 zu bestimmen, denn indem durch den festen Teil 2 der magnetische Gesamtfluss positionsabhängig in die beiden magnetischen Kreise verteilt wird, besitzen die Spannungen $U_4$ und $U_5$ an den Anschlüssen der Sensorspulen 4 und 5 die gewünschte Positionsabhängigkeit.

Bei einer bevorzugten Ausführungsform der erfindungsgemässen Vorrichtung wird der Abstand zwischen den U-förmigen Elementen 6 und 7 derart gewählt, dass bei einer Bewegung des beweglichen Teils 1 zwischen den an den Anschlüssen der Sensorspulen 4 und 5 gemessenen Ausgangssignalen $U_4$ und $U_5$ eine Phasenverschiebung von 90° vorhanden ist. Gemäss Fig. 1 wirkt das Element 6 bzw. 7 zusammen mit dem entsprechenden Element 2a bzw. 2b, wobei die Elemente 2a und 2b benachbart sind. In einer weiteren Ausführungsform der Erfindung ist vorgesehen, dass weitere Elemente bzw. Zähne zwischen den für die magnetische Kopplung massgebenden Elementen 2a und 2b vorhanden sind. Voraussetzung ist, dass die Elemente auf dem Trägerelemente regelmässig angeordnet sind.

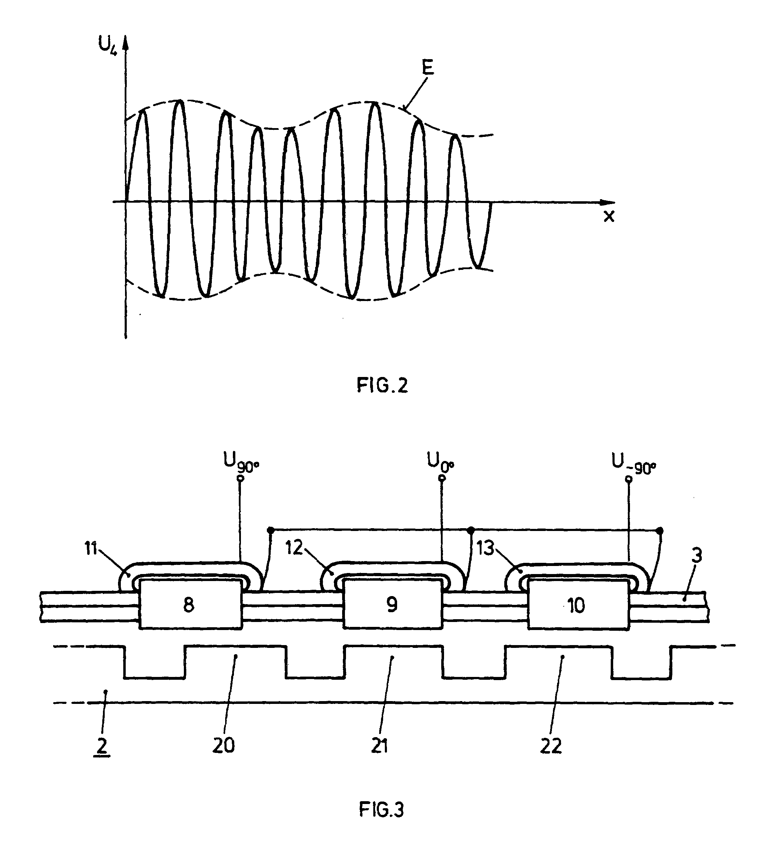

Um eine ständige Veränderung des magnetischen Flusses zu erhalten, wird vorzugsweise ein Wechselstrom in der Erregerspule 3 erzeugt. Bei einer solchen Erregung kann an der Sensorspule 4 die Spannung $U_4$ gemäss Fig. 2 gemessen werden, in der die Spannung $U_4$ in Funktion der Verschiebung x aufgetragen ist. Die Information über die Position des beweglichen Teils 1 in bezug auf den festen Teil 2 ist dabei in einer Enveloppe E des Spannungssignals $U_4$ enthalten. Die in dieser Enveloppe E enthaltene Information kann beispielsweise aus der Amplitude des Erregersignals in bekannter Weise mit Hilfe eines Spannungsteilers erhalten werden.

In Fig. 3 ist eine weitere Ausführungsform der erfindungsgemässen Vorrichtung dargestellt. Bei dieser bevorzugten Ausführungsform sind drei Sensorspulen 11, 12 und 13 auf drei, ebenfalls von der Erregerspule 3 durchdrungenen U-förmigen Elementen 8, 9 und 10 vorgesehen. Durch die Einführung einer gegenüber der Ausführungsform gemäss Fig. 1 zusätzlichen Sensorspule 8 wird die Möglichkeit geschaffen, ein vorhandenes Nullsignal auf elegante Weise zu Kompensieren. Wird dem Signal der Sensorspule 9 die Phase 0° zugewiesen, so weisen die Signale der Sensorspulen 8 und 10 die Phasen 90° bzw. -90° auf. Durch Verbinden der einen Anschlüsse der Sensorspulen 8, 9 und 10 entsteht am ändern Anschluss $U_{90}$ der Sensorspule 8 und am ändern Anschluss $U_0$ der Sensorspule 9 ein um die Offsetspannung kompensiertes Signal bezogen auf den ändern Anschluss $U_{-90}$ der dritten Sensorspule 10.

Das gewünschte Signal ergibt sich bei dieser Ausführungsform aus der Differenz zwischen den Spannungswerten $U_{90}$ und $U_{-90}$.

Die sich aus dem prinzipiellen Aufbau gemäss Fig. 1 und 3 ergebenden Ausführungsformen der erfindungsgemässen Vorrichtungen eignen sich sowohl für Distanz- bzw. Geschwindigkeitsmessungen von linearen, d.h. von im wesentlichen geradlinigen Bewegungen als auch für kreisförmige Bewegungen, einschliesslich solche auf Kreisbahnen. Die letztgenannte Anwendung schliesst auch die Verwendung der erfindungsgemässen Vorrichtung als Drehzahlund/oder Winkelmessgerät ein.

Bei den letztgenannten Verwendungen ist der erste Teil 1 gemäss Fig. 1 vorzugsweise stationär, d.h. fest, und der zweite Teil 2 beweglich, mithin werden der erste Teil 1 Stator und der zweite Teil 2 Rotor genannt. Grundsätzlich gelten die Ausführungen zu den Fig. 1 bis 3 in entsprechender Weise, da lediglich die relative Geschwindigkeit bzw. Lage des ersten zum zweiten Teil 1, 2 von Bedeutung ist. Denkbar ist daher auch, dass sowohl der erste als auch der zweite Teil 1, 2 drehbar gelagert sind. Eine Anwendung der letztgenannten Ausführungsform ist beispielsweise bei einem Differential, bei dem die Ausgleichsbewegungen aufgezeichnet werden sollen.

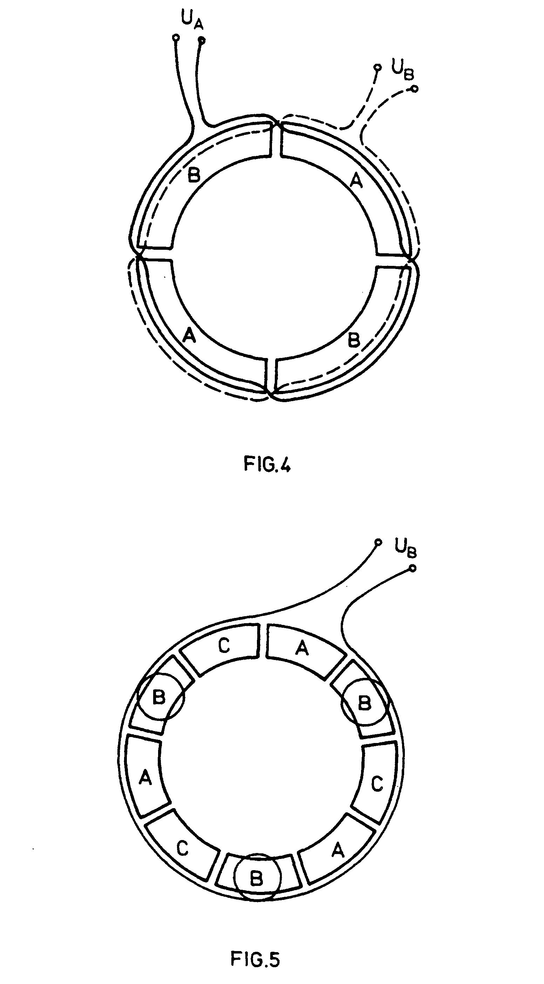

In Fig. 4 ist eine ringförmige Ausführungsform der erfindungsgemässen Vorrichtung gemäss dem in Fig. 1 gezeigten prinzipiellen Aufbau dargestellt. Für jede Sensorspule 6 und 7 gemäss Fig. 1 sind zwei Spulen in Serie geschaltet, wobei unter dem Begriff "Spule" auch bereits Leitungsanordnungen verstanden werden, bei denen eine Kopplung mit den U-förmigen Elementen A und B vorhanden ist, indem lediglich ein Leiter in ein U-förmiges Element aufgenommen wird. So wird gemäss Fig. 4 die Sensorspule A im Polsegment A innerhalb und im Bereich des Polsegmentes B ausserhalb des magnetischen Kreises geführt. Entsprechendes gilt für die Sensorspule B, von der eine Windung strichliniert dargestellt ist.

Im übrigen ist die Erregerspule 3 gemäss Fig. 1 in Fig. 4 nicht dargestellt. Bei ringförmigen erfindungsgemässen Vorrichtungen ist diese entsprechend den Ausführungen zu Fig. 1 als Ring vorhanden.

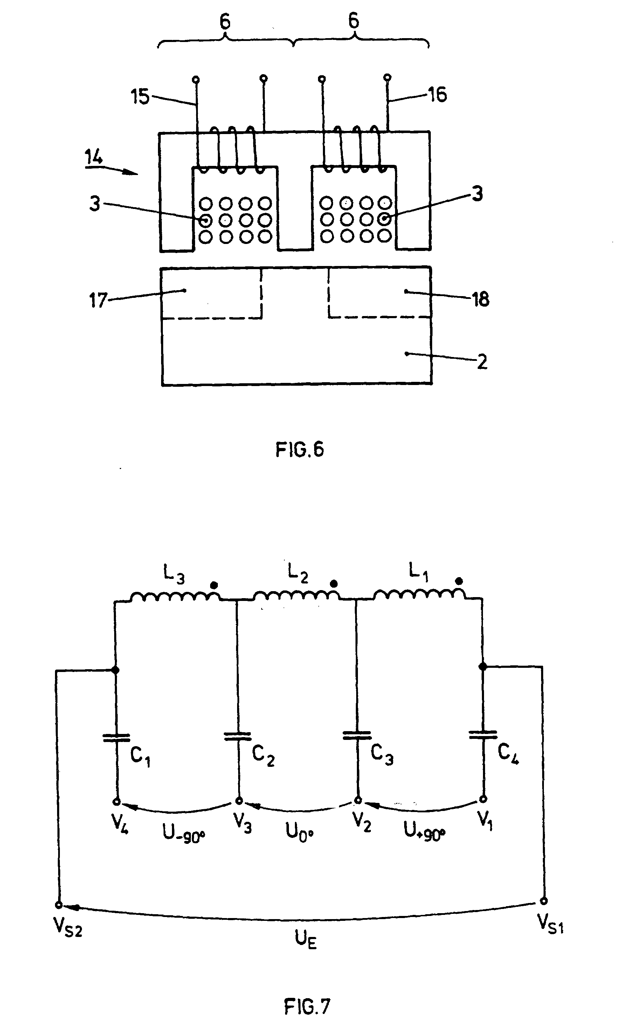

Fig. 5 zeigt eine Ausführungsform, bei der die erfindungsgemässe Vorrichtung nach dem in Fig. 3 dargestellten Prinzip aufgebaut ist, wobei - wie schon bei der Ausführungsform gemäss Fig. 4 - eine Sensorspule durch serielles zusammenschalten mehrere Spulen erhalten wird, die vorzugsweise gleichmässig über den Kreisring verteilt sind. In Fig. 5 sind die zu den gleichen Sensorspulen gehörenden Polabschnitte mit identischen Grossbuchstaben A, B oder C bezeichnet. Von den drei Sensorspulen 8, 9 oder 10 gemäss Fig. 3 ist lediglich eine, nämlich eine Sensorspule B schematisch dargestellt. Im Gegensatz zu der Spulenausführungsform gemäss Fig. 4 ist mit der Schlaufe bei den Polsegmenten angedeutet, dass die Spulen wie die Sensorspulen 4 und 5 bzw. 11, 12 und 13 gemäss Fig. 1 bzw. 3 um die U-förmigen Elemente 6 und 7 bzw. 8, 9 und 10 realisiert sind. Bei dieser Ausführungsform können zudem die Sensorspulen zur Reduktion der Streuinduktivität konvex/konkav - d.h. an die Rundung angepasst - gewickelt werden.

Die Ausführung der Sensorspulen gemäss Fig. 4 ist zwar konstruktiv äusserst einfach, jedoch weisen diese verglichen mit der Ausführung gemäss Fig. 5 eine höhere Streuinduktivität und einen grösseren ohmschen Widerstand auf.

Die Verteilung von mehreren Sensorteilspulen über den Kreisumfang gemäss Fig. 5 hat den wesentlichen Vorteil, dass sich den Sensorsignalen überlagerte Schwingungen, die aufgrund von Asymmetrien beispielsweise durch Fertigungstoleranzen entstehen, kompensieren. Dabei führen bereits kleinste Veränderungen des Luftspaltes zwischen beweglichem und festem Teil 1 und 2 (Fig. 1 und 3) zu erheblichen Signalanteilen, die sogar stärker sind als Signalanteile durch Veränderung der überlagerten Polflächen, aufgrund der die Position bzw. die Geschwindigkeit bestimmt wird. Luftspaltveränderungen, d.h. Polabstandsänderungen, entstehen nicht nur durch Fertigungstoleranzen der Sensorgeometrie sondern insbesondere auch durch Wärmedehnungen oder etwa durch Toleranzen im Lager des beweglichen Teils 2. Besonders die letztgenannten Toleranzen lassen Schwingungen zu, die sich entsprechend auf das Sensorsignal auswirken.

Durch die erfindungsgemässe Aufteilung einer Sensorspule auf mehrere in Serie geschaltete Spulen, die am Umfang des Sensorringes angeordnet sind, wird ermöglicht, ein durch eine asymmetrische Belastung hervorgerufener vergrösserter Luftspalt auf der einen Seite - und damit eine verkleinerte Reluktanz an dieser Stelle - mit einem verkleinerten Luftspalt auf der gegenüberliegenden Seite - und damit zu einer vergrösserten Reluktanz - zu kompensieren. Damit wird durch die vorgeschlagenen Anordnung der Sensorteilspulen ein durch eine Asymmetrie hervorgerufenes Störsignal in erster Näherung kompensiert. Eine Verbesserung des Kompensationsverhaltens kann dadurch erreicht werden, indem anstelle von drei Sensorteilspulen gemäss Fig. 5 eine weiterer Unterteilung der Sensorspule, beispielsweise in 6 oder 12 Teilspulen, vorgenommen wird.

Die Spulenanordnung gemäss Fig. 5 kann aber auch dazu verwendet werden, allfällig vorhandene Schwinginformationen des beispielsweise auf einer Welle montierten beweglichen Teils gezielt zu detektieren. Bei einer solchen Ausführungsform sind die Anschlüsse der Teilspulen nach aussen auf eine Subtraktionsschaltung geführt, in der die Weginformation eliminiert wird. Die herausgeführten Anschlüsse der Teilspulen können gleichzeitig zur Bestimmung der Weginformation in beschriebener Art und Weise zusammengeschaltet werden, womit Weg- und Schwingungsinformationen gleichzeitig vorliegen.

Die erfindungsgemässen Vorrichtungen eignen sich darüber hinaus vorzüglich zur Messung der Torsion einer Welle. Dabei werden zwei Sensorsysteme an den Enden der Welle befestigt. Die Differenz der beiden von den Sensorsystemen erhaltenen Signale wird in bekannter Weise zur Bestimmung des Drehmomentes verwendet.

Eine weitere Ausführungsform der erfindungsgemässen Vorrichtung besteht darin, dass zwei Sensorsysteme gemäss Fig. 4 oder 5 vorgesehen sind, wobei die beiden Systeme eine unterschiedliche Anzahl von Polen aufweisen. Damit ist es unter Auswertung der Phasenbeziehung zwischen den Systemen möglich, bei hoher Auflösung eine Umdrehung absolut zu kodieren. Das Verhältnis der Polzahlen wird beispielsweise mit n/(n-1) angegeben, wobei n ein ganze Zahl, zum Beispiel 8 oder 64, ist.

Fig. 6 zeigt in einem Schnitt senkrecht zur Erregerspule 3 eine eben beschriebene Ausführungsvariante mit zwei Sensorsystemen. Bei dieser Ausführungsform sind die U-förmigen Elemente 6 gemäss Fig. 1 zu einem E-förmigen Element 14 zusammengelegt, in dem sich einerseits die beiden Erregerspulen 3 und anderseits Sensorspulen 15 und 16 befinden. Entsprechend den eben beschriebenen, zum ersten Teil gehörenden Bestandteilen ist auch der zweite Teil 2 ausgebildet, der wiederum ein Trägerelement aufweist, auf dem Zähne 18 für das eine Teilsystem und Zähne 17 für das andere Teilsystem angeordnet sind. Die Anzahl der Zähne der Teilsysteme ist unterschiedlich und kann beispielsweise in einem der vorstehend genannten Verhältnisse gewählt werden.

Eine weitere Ausführungsvariante, mit der die absolute Position innerhalb einer Umdrehung bestimmt werden kann, besteht darin, dass ein Nullpunktsignal generiert wird. Dies hat auch den weiteren Vorteil, dass mit jeder Umdrehung allfällige Fehler bei der Datenübertragung erkannt werden können.

Zur Erzeugung des erwähnten Nullpunktsignals wird vorgeschlagen, dass der gezahnte zweite Teil eine Unregelmässigkeit aufweist, d.h., es fehlt ein Zahn. Zwei Sensorspulen, die im Zahnabstand angeordnet sind, erzeugen die gleiche Induktionssignale, solange sich die Sensorspulen im Bereich der regelmässig angeordneten Zähne des zweiten Teils bewegen. Werden die Signale der Sensorspulen voneinander subtrahiert, so ist des erhaltene Signal in diesem Bereich gleich null. Sobald sich jedoch die Zahnlücke bei den Sensorspulen befindet, wird ein Signal erzeugt, womit die Absolutposition bekannt ist.

Wie erwähnt wird die erfinderische Vorrichtung vorzugsweise mit einem Wechselstrom in der Erregerspule 3 (Fig. 1 und 3) erregt. Es ist jedoch auch denkbar, die Erregerspule 3 mit einem Gleichstrom zu erregen, womit bei Bewegung des beweglichen Teils 2 (Fig. 1 und 3) in den Sensorspulen Spannungen induziert werden, deren Amplituden proportional zum magnetische Fluss und zur Drehzahl ist und als Tachospannung verwendbar ist. Durch Auswerten mittels einer hierzu geeigneten und an sich dem Fachmann bekannten Elektronik werden Weginformationen ermittelt. Damit die Elektronik durch eine in Folge hoher Drehzahlen erhaltene hohe Tachospannung nicht zerstört wird, wird der Erregerstrom ab einer bestimmten Drehzahl zurückgenommen. Diese Methode der Signalerzeugung und Auswertung ist jedoch nicht für kleine Drehzahlen und für den Stillstand geeignet, da die Tachospannung dann gegen Null geht. Denkbar ist jedoch eine Kombination der Erregung mittels Wechselstrom für Stillstand oder kleine Drehzahlen und der Erregung mittels Gleichstrom für höhere Drehzahlen.

Wie erwähnt ist die Verwendung der Erfindung nicht allein auf kreisförmige Anordnungen eingeschränkt. Denkbar sind auch lineare Bewegung, wobei diesfalls vorzugsweise der zweite Teil ortsfest und der erste Teil verschiebbar gelagert ist.

Im Hinblick auf den Einsatz der erfindungsgemässen Vorrichtung bei Planetengetrieben wird weiter vorgeschlagen, sowohl einen Innenring als auch einen Aussenring vorzusehen, die mit als Zähne ausgebildeten Elementen gemäss dem zweiten Teil 2 (Fig. 1 und 3) auszustatten und die beide beweglich - d.h. drehbar - in bezug auf einen zwischen diesen Ringen angeordneten Sensorring sind. Der Sensorring ist dabei mit den Sensorspulen gemäss Fig. 1 bzw. 3 ausgestattet und fix montiert.

Der Vollständigkeit halber wird darauf hingewiesen, dass der passive zweite Teil 2 (Fig. 1 bzw. 3) auch als wellenförmiger Ring in der Art eines Toleranzringes ausgebildet sein kann.

In Fig. 7 ist eine weitere Ausführungsform der erfindungsgemässen Vorrichtung dargestellt, bei der die Sensor- und die Erregerspulen zusammen geschaltet sind. So sind drei Spulen $L_1$, $L_2$ und $L_3$ in bekannter Weise, d.h. gemäss Fig. 3 und der entsprechenden Beschreibung, zusammen geschaltet. An den Abgriffen an den Enden bzw. zwischen den in Serie geschalteten Spulen $L_1$, $L_2$ und $L_3$ werden die Potentiale $V_1$ bis $V_4$ abgegriffen, wobei mittels Kondensatoren $C_1$ bis $C_4$ eine spannungsmässige Entkopplung vorgenommen wird. Wird an den Enden der in Serie geschalteten Spulen $L_1$ bis $L_3$ die Erregerspannung $U_E = V_{S1} - V_{S2}$ angelegt, so können die entsprechenden Spannungen $U_{-90°}$, $U_{0°}$ und $U_{+90°}$ wie folgt bestimmt werden:

$$U_{+90°} = V_1 - V_2$$

$$U_{0°} = V_2 - V_3$$

$$U_{+90°} = V_3 - V_4$$

Bei dieser Ausführungsform sind lediglich vier Anschlussdrähte erforderlich.

**Patentansprüche**

1. Vorrichtung zur Positions- und / oder Geschwindigkeitsbestimmung, bestehend aus einem ersten Teil (1) und einem zweiten Teil (2), der mit in regelmässigem Abstand als Zähne ausgebildeten Elementen (2a, 2b; 20, 21, 22) versehen ist, wobei die Teile (1, 2) relativ zueinander verschiebbar sind und wobei der erste Teil (1) mindestens eine Erregerspule (3) zur Erzeugung von magnetischem Fluss, der im wesentlichen in mindestens zwei Elementen (6, 7; 8, 9, 10) des ersten Teils (1) und zumindest teilweise und in Abhängigkeit der relativen Lage zwischen dem ersten und dem zweiten Teil (1, 2) über mindestens zwei Elemente (2a, 2b; 20, 21, 22) des zweiten Teils (2) geführt ist, und mindestens zwei Sensorspulen (4, 5; 11, 12, 13) aufweist, die je um mindestens ein Element (6, 7; 8, 9, 10) des ersten Teils (1) angeordnet sind, wobei die Elemente (6, 7; 8, 9, 10) des ersten Teils (1) derart in Bezug auf die Elemente (2a, 2b; 20, 21, 22) des zweiten Teils (2) angeordnet sind, dass die Signale an den Sensorspulen (4, 5; 11, 12, 13) phasenverschoben sind, **dadurch gekennzeichnet, dass** die mindestens zwei Elemente (6, 7; 8, 9, 10) U-förmig sind, wobei eine durch die U-Förmigkeit entstehende Ausnehmung in den Elementen (6, 7; 8, 9, 10) auf derjenigen Seite des ersten Teils (1) angeordnet ist, der an den zweiten Teil (2) angrenzt, und dass die mindestens eine Erregerspule (3) durch die Ausnehmung verläuft.

2. Vorrichtung nach Anspruch 1, **dadurch gekennzeichnet, dass** der Absolutbetrag der Phasenverschiebung zwischen zwei Signalen der Sensorspulen (4, 5; 11, 12, 13) grösser als 0° und kleiner als 180°, vorzugsweise 90° ist.

3. Vorrichtung nach einem der vorangehenden Ansprüche, **dadurch gekennzeichnet, dass** zwei Sensorspulen (4, 5) vorgesehen sind, wobei der Absolutbetrag der Phasenverschiebung zwischen den Signalen der Sensorspulen (4, 5) 90° beträgt.

4. Vorrichtung nach einem der Ansprüche 1 oder 2, **dadurch gekennzeichnet, dass** drei Sensorspulen (11, 12, 13) vorgesehen sind, wobei bei Zuweisung der Phase 0° an das Ausgangssignal einer ersten Sensorspule (12) die Phasenverschiebung des Ausgangssignals der zweiten Sensorspule (11) 90° und die Phasenverschiebung des Ausgangssignals der dritten Sensorspule (13) -90° in bezug auf das Ausgangssignal der ersten Sensorspule (12) betragen.

5. Vorrichtung nach einem der vorangehenden Ansprüche, **dadurch gekennzeichnet, dass** der erste Teil (1) verschiebbar gelagert und der zweite Teil (2) ortsfest ist.

6. Vorrichtung nach einem der vorangehenden Ansprüche, **dadurch gekennzeichnet, dass** der erste und der zweite Teil (1, 2) kreisförmig ausgebildet sind.

7. Vorrichtung nach Anspruch 6, **dadurch gekennzeichnet, dass** die Elemente (6, 7; 8, 9, 10) des ersten Teils (1) im wesentlichen gleichmässig über dessen Umfang verteilt sind.

8. Vorrichtung nach Anspruch 6 oder 7, **dadurch gekennzeichnet, dass** die Elemente (2a, 2b; 20, 21, 22) des zweiten Teils (2) gleichmässig über dessen Umfang.verteilt sind.

9. Vorrichtung nach Anspruch 6 oder 7, **dadurch gekennzeichnet, dass** die Elemente (2a, 2b; 20, 21, 22) des zweiten Teils (2) bis auf ein fehlendes Element, wodurch eine Lücke gebildet ist, gleichmässig über dessen Umfang verteilt sind.

10. Vorrichtung nach einem der Ansprüche 6 bis 9, **dadurch gekennzeichnet, dass** mindestens eine Sensorspule (6, 7; 11, 12, 13) in mehrere Teilspulen (A, B; A, B, C) aufgeteilt ist.

11. Vorrichtung nach einem der vorangehenden Ansprüche, **dadurch gekennzeichnet, dass** die Erregerspule (3) mit einem Wechsel- oder einem Gleichstrom beaufschlagt ist.

12. Vorrichtung nach einem der Ansprüche 6 bis 11, **da-**

**durch gekennzeichnet, dass** der erste Teil (1) ortsfest und der zweite Teil (2) drehbar gelagert ist.

13. Verwendung der Vorrichtung nach einem der Ansprüche 6 bis 12 zum Bestimmen einer Drehzahl vom ersten Teil (1) gegenüber dem zweiten Teil (2), wobei die Erregerspule (3) bis zu einer vorgebbaren Drehzahl mit Wechselstrom und über dieser Drehzahl mit Gleichstrom erregt wird.

14. Verwendung nach Anspruch 13, **dadurch gekennzeichnet, dass** bei Überschreiten einer kritischen Drehzahl, die über der vorgebbaren Drehzahl liegt, der Erregerstrom proportional zur Differenz zwischen momentaner Drehzahl und kritischer Drehzahl reduziert wird.

15. Verwendung von zwei Vorrichtungen nach einem der Ansprüche 6 bis 12 zur Messung einer Torsion oder eines Drehmomentes einer Welle, wobei die Vorrichtungen an den Enden der Welle angeordnet sind.

16. Verwendung von zwei Vorrichtungen nach einem der Ansprüche 6 bis 12 zur absoluten Ortsbestimmung, wobei U-förmige Elemente (14) des ersten Teils (1) der einen Vorrichtung mit U-förmigen Elementen (14) des ersten Teils (1) der anderen Vorrichtung zu E-förmigen Elementen zur Aufnahme von zwei Erregerspulen (3) zusammengefasst sind und wobei die Anzahl der Elemente (17, 18) der zweiten Teile (2) unterschiedlich sind.

## Claims

1. Device for the determination of position and/or speed consisting of a first part (1) and a second part (2) that is provided with elements (2a,2b;20,21,22) arranged as teeth regularly spaced, whereby the parts (1,2) are relatively displaceable to each other and whereby the first part (1) has at least one excitation coil (3) for the generation of magnetic flux, which is substantially guided in at least two elements (6,7;8,9,10) of the first part (1) and at least partially depending on the relative position between the first and second part (1,2) via at least two elements (2a,2b;20,21,22) of the second part (2), and at least two sensor coils (4,5;11,12,13) each of which is arranged around at least one element (6,7; 8,9,10) of the first part (1), the elements (6,7;8,9,10) of the first part (1) being arranged in relation to the elements (2a,2b;20,21,22) of the second part in such a way that the signals at he sensor coils (4,5; 11,12,13) are phase shifted, **characterized in that** the at least two elements (6,7;8,9,10) are U-shaped, a recess in the elements (6,7;8,9,10) arising from the U-shaped form being arranged on the side of the first part (1), which side is adjacent to the second part (2), and that the at least one excitation coil (3) is extending through the recess.

2. Device according to claim 1, **characterized in that** the absolute value of the phase shift between two signals of the sensor coils (4,5;11,12,13) is greater than 0° and smaller than 180°, preferably equal to 90°.

3. Device according to one of the preceding claims, **characterized in that** two sensor coils (4,5) are provided, the absolute value of the phase shift between the signals of the sensor coils (4,5) being 90°.

4. Device according to one of the claims 1 or 2, **characterized in that** three sensor coils (11,12,13) are provided, when allocating the phase 0° to the output signal of a first sensor coil (12), the phase shift of the output signal of the second sensor coil (11) being 90° and the phase shift of the output signal of the third sensor coil (13) being -90° in relation to the output signal of the first sensor coil (12).

5. Device according to one of the preceding claims, **characterized in that** the first part (1) is displaceable supported and the second part (2) is fixed.

6. Device according to one of the preceding claims, **characterized in that** the first and the second part (1, 2) are designed circularly.

7. Device according to claim 6, **characterized in that** the elements (6,7;8,9,10) of the first part (1) are substantially regularly distributed over the circumference of the first part (1).

8. Device according to claim 6 or 7, **characterized in that** the elements (2a,2b;20,21,22) of the second part (2) are regularly distributed over the circumference of the second part (2).

9. Device according to claim 6 or 7, **characterized in that** the elements (2a,2b;20,21,22) of the second part (2), except for one missing element, by which a gap is created, are distributed over the circumference of the second part (2).

10. Device according to one of the claims 6 to 9, **characterized in that** at least one sensor coil (6, 7; 11, 12, 13) is divided into several partial coils (A,B;A,B, C).

11. Device according to one of the preceding claims, **characterized in that** the excitation coil (3) is supplied with an alternating or a direct current.

12. Device according to one of the claims 6 to 11, **char-**

**acterized in that** the first part (1) is fixed and the second part (2) is pivot-ably supported.

13. Use of the device according to one of the claims 6 to 12 for determining of rotational speed of the first part (1) in relation to the second part (2), the excitation coil (3) being excited by alternating current up to a preset-able rotational speed, and being excited by direct current above this rotational speed.

14. Use according to claim 13, **characterized in that**, upon exceeding a critical rotational speed that is above the preset-able rotational speed, the excitation current is reduced proportional to the difference between the momentary rotational speed and the critical rotational speed.

15. Use of two devices according to one of the claims 6 to 12 for measuring torsion or a torque of a shaft, the devices being arranged at the ends of the shaft.

16. Use of two devices according to one of the claims 6 to 12 for absolute position determination, U-shaped elements (14) of the first part (1) of the one device being combined with U-shaped elements (14) of the first part (1) of the other device to form E-shaped elements for receiving two excitation coils (3), and the number of elements (17,18) of the second parts being different.

**Revendications**

1. Dispositif pour la détermination de position ou de vitesse, comprenant une première partie (1) et une seconde partie (2) équipée d'éléments (2a, 2b, 20; 21, 22) en forme de dents espacées régulièrement, lesdites parties (1, 2) pouvant être déplacées relativement l'une par rapport à l'autre et la première partie (1) étant équipée d'au moins une bobine d'excitation (3) pour générer un flux magnétique, flux qui passe essentiellement par au moins deux éléments (6, 7; 8, 9, 10) de la première partie (1) et au moins partiellement et en fonction de la position relative entre la première et la seconde partie (1, 2) par au moins deux éléments (2a, 2b; 20, 21, 22) de la seconde partie (2), et d'au moins deux bobines détectrices (4, 5; 11, 12, 13) arrangées chaque autour au moins un élément (6, 7; 8, 9, 10) de ladite première partie (1), les éléments (6, 7; 8, 9, 10) de la première partie (1) étant avangés par rapport aux éléments (2a, 2b; 20, 21, 22) de la seconde partie (2) de telle manière que les signaux aux bobines détectrices (4, 5; 11, 12, 13) soient déphasés, **caractérisé en ce que** les au moins deux éléments (6, 7; 8, 9, 10) présentent une forme en U avec l'ouverture formée dans les éléments (6, 7; 8, 9, 10) due à cette forme en U se trouvant sur la face de la

première partie qui est adjacente à la seconde partie (2) et **en ce que** ladite au moins une bobine d'excitation passe à travers cette ouverture.

2. Dispositif selon la revendication 1, **caractérisé en ce que** la valeur absolue du décalage de phase entre deux signaux des bobines détectrices (4, 5; 11, 12, 13) est plus grande que 0° et plus petite que 180°, de préférence 90°.

3. Dispositif selon l'une des revendications précédentes, **caractérisé par** la présence de deux bobines détectrices (4, 5), la valeur absolue du décalage de phase entre les signaux des bobines détectrices (4, 5) étant de 90°.

4. Dispositif selon l'une des revendications 1 ou 2, **caractérisé par** la présence de trois bobines détectrices (11, 12, 13), avec au cas de l'affectation de la phase 0° au signal de sortie d'une première bobine détectrice (12) le décalage de phase du signal de sortie de la seconde bobine détectrice (11) étant 90° et le décalage de phase du signal de sortie de la troisième bobine détectrice (13) étant de -90° par rapport au signal de sortie de la première bobine détectrice (12).

5. Dispositif selon l'une des revendications précédentes, **caractérisé en ce que** ladite première partie (1) est montée de manière à pouvoir être déplacée et **en ce que** ladite seconde partie (2) est fixe.

6. Dispositif selon l'une des revendications précédentes, **caractérisé en ce que** ladite première et ladite seconde partie (1, 2) sont construites en forme de cercle.

7. Dispositif selon la revendication 6, **caractérisé en ce que** les éléments (6, 7; 8, 9, 10) de la première partie (1) sont distribués essentiellement régulièrement sur sa circonférence.

8. Dispositif selon la revendication 6 ou 7, **caractérisé en ce que** les éléments (2a, 2b; 20, 21, 22) de la seconde partie (2) sont distribués régulièrement sur sa circonférence.

9. Dispositif selon la revendication 6 ou 7, **caractérisé en ce que** les éléments (2a, 2b; 20, 21, 22) de la seconde partie (2) sont, à l'exception d'un élément manquant menant à la formation d'un interstice, distribués régulièrement sur sa circonférence.

10. Dispositif selon l'une des revendications 6 à 9, **caractérisé en ce qu'**au moins une bobine détectrice (4, 5; 11, 12, 13) est subdivisée en plusieurs bobines partielles (A, B; A, B, C).

11. Dispositif selon l'une des revendications précédentes, **caractérisé en ce que** la bobine d'excitation (3) est alimentée par du courant alternatif ou du courant continu.

12. Dispositif selon l'une des revendications 6 à 11, **caractérisé en ce que** ladite première partie (1) est fixe et ladite seconde partie (2) est montée de manière rotatif.

13. Utilisation du dispositif selon l'une des revendications 6 à 12, pour déterminer la vitesse de rotation de la première partie (1) par rapport à la seconde partie (2), la bobine d'excitation (3) étant alimentée jusqu'à une vitesse prédéterminée avec du courant alternatif et au-dessus de cette vitesse avec du courant continu.

14. Utilisation selon la revendication 13, **caractérisé en ce que** lors du dépassement d'une vitesse de rotation critique se trouvant au-dessus de ladite vitesse prédéterminé, le courant d'excitation est réduit proportionnellement à la différence entre la vitesse de rotation momentanée et la vitesse de rotation critique.

15. Utilisation de deux dispositifs selon l'une des revendications 6 à 12 pour mesurer une torsion ou un couple d'un arbre, lesdits dispositifs étant disposés aux extrémités de l'arbre.

16. Utilisation de deux dispositifs selon l'une des revendications 6 à 12 pour la détermination absolue d'une position des éléments (14) en forme de U première partie (1) de l'un des dispositifs étant combinés avec des éléments (14) en forme de U de la première partie (1) de l'autre desdits dispositifs pour former des éléments en forme de E pour recevoir deux bobines d'excitation (3), le nombre d'éléments (17, 18) des secondes parties (2) étant inégal.

FIG.1

FIG.2

FIG.3

FIG.4

FIG.5

FIG.6

FIG.7